# EUROPEAN PATENT SPECIFICATION

(11) **EP 3 243 635 B1**
(45) Date of publication and mention of the grant of the patent: **05.05.2021**
(21) Application number: 16826687.2
(22) Date of filing: 25.03.2016
(51) Int. Cl.: B22F 3/105, B29C 64/106, B29C 64/194, B33Y 10/00, B33Y 30/00, B33Y 40/00

(54) **THREE-DIMENSIONAL LAMINATION SHAPING DEVICE, METHOD FOR CONTROLLING THREE-DIMENSIONAL LAMINATION SHAPING DEVICE, AND PROGRAM FOR CONTROLLING THREE-DIMENSIONAL LAMINATION SHAPING DEVICE**
VORRICHTUNG ZUR DREIDIMENSIONALEN LAMINIERUNG UND FORMUNG, STEUERUNGSVERFAHREN FÜR VORRICHTUNG ZUR DREIDIMENSIONALEN LAMINIERUNG UND FORMUNG UND STEUERUNGSPROGRAMM FÜR VORRICHTUNG ZUR DREIDIMENSIONALEN LAMINIERUNG UND FORMUNG
DISPOSITIF DE FORMAGE EN STRATES EN TROIS DIMENSIONS, PROCÉDÉ POUR LA COMMANDE DE DISPOSITIF DE FORMAGE EN STRATES EN TROIS DIMENSIONS ET PROGRAMME POUR LA COMMANDE DU DISPOSITIF DE FORMAGE EN STRATES EN TROIS DIMENSIONS

(43) Date of publication of application: 15.11.2017
(73) Proprietor: Technology Research Association for Future Additive Manufacturing, Tokyo 103-0027 (JP)
(72) Inventor: NIITANI Haruhiko, Ritto-shi Shiga 520-3080 (JP); AKAMA Satoru, Ritto-shi Shiga 520-3080 (JP); WAKANA Tomohiro, Ritto-shi Shiga 520-3080 (JP)
(74) Representative: TBK
(86) International application number: PCT/JP2016/059766
(87) International publication number: WO 2017/163431

(56) References cited:
- WO-A2-2015/012992
- JP-A- 2010 132 960
- JP-A- 2015 196 856
- JP-B1- 5 840 312
- US-A1- 2010 006 228
- US-A1- 2015 142 160

## Description

### TECHNICAL FIELD

The present invention relates to a three-dimensional laminating and shaping apparatus, a control method of the three-dimensional laminating and shaping apparatus, and a control program of the three-dimensional laminating and shaping apparatus.

### BACKGROUND ART

In the above technical field, patent literature 1 discloses a technique of removing the outer layer and unnecessary portion of a shaped object during formation of the shaped object in a powder bed type three-dimensional laminating and shaping apparatus. In the technique described in patent literature 1, however, cutting of the side surface of a shaped object is complicated depending on the shape of the shaped object, thereby requiring a long time.

Patent Literature 2 discloses a technique of performing a machining operation on a formed layer before the next formed layer is formed.

Patent Literature 3 discloses engaging and processing an interior surface and an exterior surface of a shaped product by a pair of abrasive cutters.

Patent Literature 4 discloses a three-dimensional laminating and shaping apparatus, a control method of the three-dimensional laminating and shaping apparatus, and a control program of the three-dimensional laminating and shaping apparatus as specified in the preambles of claims 1, 3 and 4. In the technique described in patent literature 4, a protrusion resulting from abnormal sintering is removed on an upper surface of a formed layer by means of a rotary cutter.

### CITATION LIST

### PATENT LITERATURE

Patent literature 1: JP 2010 280173 A
Patent literature 2: JP 2015 196856 A
Patent literature 3: WO 2015/012992 A2
Patent literature 4: US 2010/006228 A1

### SUMMARY OF THE INVENTION

### TECHNICAL PROBLEM

The technical problem to be solved by the present invention is to provide a technique that improves shaping precision without performing finishing processing.

### SOLUTION TO PROBLEM

One aspect of the present invention provides a three-dimensional laminating and shaping apparatus as specified in claim 1, another aspect of the present invention provides a control method of a three-dimensional laminating and shaping apparatus as specified in claim 3, and still another aspect of the present invention provides a control program of a three-dimensional laminating and shaping apparatus as specified in claim 4.

### ADVANTAGEOUS EFFECTS OF INVENTION

According to the present invention, it is possible to improve the shaping precision without performing finishing processing.

### BRIEF DESCRIPTION OF DRAWINGS

Fig. 1 is a view showing the arrangement of a three-dimensional laminating and shaping apparatus according to the first embodiment of the present invention;
Fig. 2 is a view showing the arrangement of a three-dimensional laminating and shaping apparatus according to the second embodiment of the present invention;
Fig. 3 is a view for explaining an example of a bead formed by the three-dimensional laminating and shaping apparatus according to the second embodiment of the present invention;
Fig. 4 is a view for explaining an example of shaping of a three-dimensional laminated and shaped object by the three-dimensional laminating and shaping apparatus according to the second embodiment of the present invention;
Fig. 5 is a view showing a three-dimensional laminated and shaped object shaped without performing cutting by the three-dimensional laminating and shaping apparatus and a three-dimensional laminated and shaped object formed by performing cutting by the three-dimensional laminating and shaping apparatus according to the second embodiment of the present invention;
Fig. 6A is a view for explaining a problem in another example of shaping of the three-dimensional laminated and shaped object by the three-dimensional laminating and shaping apparatus according to the second embodiment of the present invention;
Fig. 6B is a view for explaining the problem in the other example of shaping of the three-dimensional laminated and shaped object by the three-dimensional laminating and shaping apparatus according to the second embodiment of the present invention;
Fig. 6C is a view for explaining the problem in the other example of shaping of the three-dimensional laminated and shaped object by the three-dimensional laminating and shaping apparatus according to the second embodiment of the present invention;
Fig. 7 is a view for explaining the other example of shaping of the three-dimensional laminated and shaped object by the three-dimensional laminating and shaping apparatus according to the second embodiment of the present invention;
Fig. 8A is a view showing an example of a three-dimensional laminated and shaped object having a structure advantageous in shaping by the three-dimensional laminating and shaping apparatus according to the second embodiment of the present invention;
Fig. 8B is a view showing another example of a three-dimensional laminated and shaped object having a structure advantageous in shaping by the three-dimensional laminating and shaping apparatus according to the second embodiment of the present invention; and
Fig. 9 is a flowchart for explaining the processing procedure of the three-dimensional laminating and shaping apparatus according to the second embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

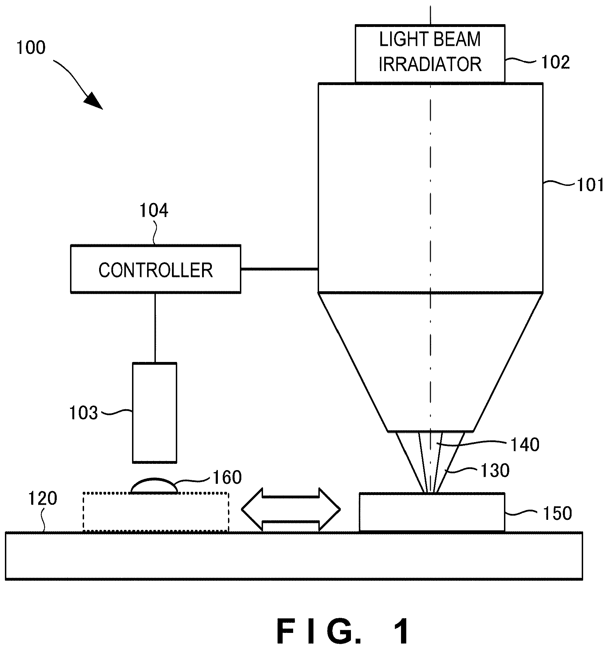

A three-dimensional laminating and shaping apparatus 100 according to the first embodiment of the present invention will be described with reference to Fig. 1. The three-dimensional laminating and shaping apparatus 100 is an apparatus for shaping a three-dimensional laminated and shaped object by ejecting a material 130 onto a shaping table 120, and irradiating the ejected material 130 with a light beam 140. As shown in Fig. 1, the three-dimensional laminating and shaping apparatus 100 includes a material ejector 101, a light beam irradiator 102, a cutter 103, and a controller 104.

The material ejector 101 ejects the material 130 of a three-dimensional laminated and shaped object 150 onto the shaping table 120 on which the three-dimensional laminated and shaped object 150 is shaped. The light beam irradiator 102 irradiates the material 130 with the light beam 140. The cutter 103 cuts a bead 160 formed when the material 130 irradiated with the light beam 140 is melted and solidified. The cutter 103 cuts the upper surface of the bead by a dimension which is smaller than a laminating height and is 1/2 or less of a bead thickness. The controller 104 controls ejection of the material 130 by the material ejector 101, irradiation with the light beam 140 by the light beam irradiator 102, and cutting of the bead 160 by the cutter 103.

According to this embodiment, it is possible to reduce the surface roughness of the shaped object while performing high-precision and high-efficiency laminating and shaping.

### [Second Embodiment]

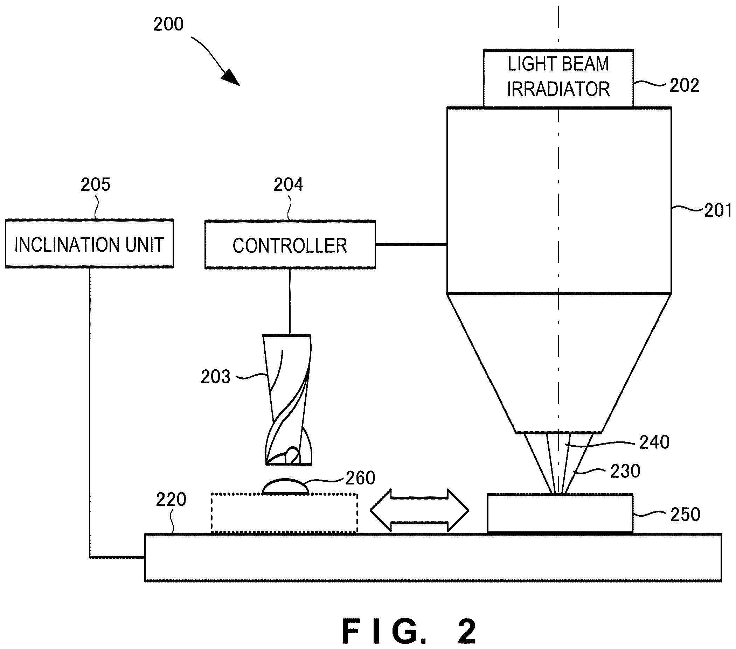

A three-dimensional laminating and shaping apparatus according to the second embodiment of the present invention will be described with reference to Figs. 2 to 9. Note that an LMD (Laser Metal Deposition) type three-dimensional laminating and shaping apparatus will be exemplified as a three-dimensional laminating and shaping apparatus 200. The three-dimensional laminating and shaping apparatus 200 can adjust the width and height of a bead 260 by controlling the output of the light beam 240 and the ejection amount of a material 230, thereby shaping a three-dimensional laminated and shaped object 250 using a high-efficiency shaping and high-precision shaping. High-efficiency shaping indicates shaping of the three-dimensional laminated and shaped object 250 by forming the bead 260 having relatively large width and height. High-precision shaping indicates shaping of the three-dimensional laminated and shaped object 250 by forming the bead 260 having relatively small width and height.

Fig. 2 is a view for explaining the arrangement of the three-dimensional laminating and shaping apparatus according to this embodiment. The three-dimensional laminating and shaping apparatus 200 includes a material ejector 201, a light beam irradiator 202, a cutter 203, a controller 204, and an inclination unit 205.

The material ejector 201 ejects the material 230 such as a metal powder onto a shaping table 220. The three-dimensional laminated and shaped object 250 is shaped on the shaping table 220. The material 230 is not limited to the metal powder, and may be, for example, a resin powder or the like.

The light beam irradiator 202 irradiates, from the distal end portion of the material ejector 201, the material 230 with the light beam 240 such as a laser beam or electron beam emitted from the light beam irradiator 202. Note that the light beam 240 is not limited to the laser beam or electron beam, and may be a light beam of another wavelength. The material 230 irradiated with the light beam 240 such as a laser beam is melted by heat (energy) applied from the light beam 240, thereby forming a molten pool. After that, the molten pool is cooled and solidified, thereby forming the bead 260. The material 230 is laminated by repeating ejection of the material 230 and irradiation with the light beam 240, thus forming the three-dimensional laminated and shaped object 250.

The cutter 203 cuts the surface of the bead 260 formed when the material 230 is melted by heat applied by the light beam 240 and solidified. The bead 260 formed when the material 230 is melted and solidified has an elliptic sectional shape. The cutter 203 cuts an upper surface of the bead 260 to be parallel to the shaping table 220 at least once during a plurality of shaping steps by said material ejector 201 and said light beam irradiator 202, and thereby reduces a roughness of a side surface of the bead 260. As the cutting amount of the upper surface of the bead 260 by the cutter 203, the cutter 203 cuts the upper surface by a dimension which is smaller than a laminating height and is 1/2 or less of the thickness of the bead 260.

At the time of cutting of the bead 260, the three-dimensional laminating and shaping apparatus 200 moves the shaping table 220 so that the bead 260 is positioned below the cutter 203. To the contrary, the three-dimensional laminating and shaping apparatus 200 may move the cutter 203 so that the bead 260 is positioned below the cutter 203. Note that the cutter 203 is, for example, a cutting tool such as an end mill. The present invention, however, is not limited to this, and any tool capable of cutting the surface of the bead 260 may be used.

The controller 204 controls ejection of the material 230, irradiation with the light beam 240, and cutting of the bead 260. Upon, for example, completion of laminating of one layer by ejecting the material 230 by the material ejector 201 and irradiating the material 230 with the light beam 240 by the light beam irradiator 202, the controller 204 may execute cutting by the cutter 203. Alternatively, upon completion of laminating of a plurality of layers (n layers), the controller 204 may execute cutting by the cutter 203. The controller 204 decides the cutting amount of the bead 260 based on the shaping precision required by the three-dimensional laminated and shaped object 250 to be shaped.

The inclination unit 205 inclines the shaping table 220. For example, if the material 230 having a high reflectance for the light beam 240 is used as the material 230 of the three-dimensional laminated and shaped object 250, the light beam 240 with which the material 230 is irradiated is reflected. The reflected light damages a condenser lens (not shown) included in the material ejector 201, an oscillator (not shown) for the light beam 240, or the like. To cope with this, the inclination unit 205 inclines the shaping table 220 so the reflected light does not enter the material ejector 201, thereby preventing the reflected light from entering the material ejector 201. If the three-dimensional laminated and shaped object 250 having a complicated shape is shaped, the shaping table 220 is inclined.

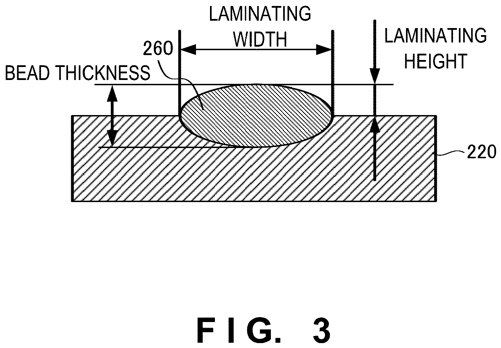

Fig. 3 is a view showing the shape of the bead 260 formed by the three-dimensional laminating and shaping apparatus 200. The bead 260 has an elliptic shape when viewed sideways. The major axis of the ellipse corresponds to a laminating width, the minor axis of the ellipse corresponds to the bead thickness, and a portion extending from the upper surface of the shaping table 220 corresponds to the laminating height. The three-dimensional laminating and shaping apparatus 200 shapes the three-dimensional laminated and shaped object by laminating a plurality of beads 260.

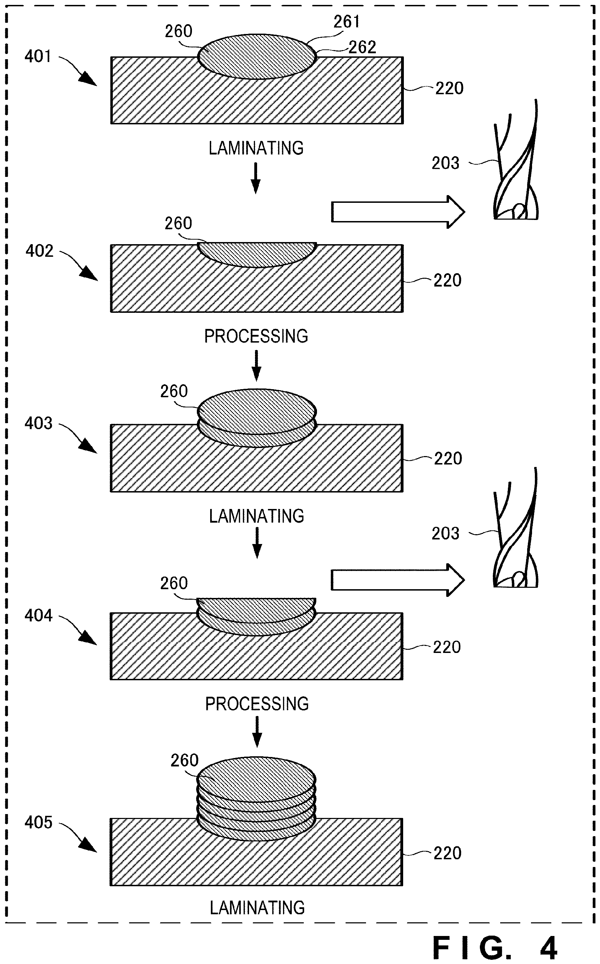

Fig. 4 is a view for explaining an example of shaping of the three-dimensional laminated and shaped object 250 by the three-dimensional laminating and shaping apparatus 200 according to this embodiment. After the bead 260 of one layer is shaped (401 in Fig. 4), the three-dimensional laminating and shaping apparatus 200 cuts, using the cutter 203, the upper surface of the bead 260 by a predetermined amount (402 in Fig. 4). This predetermined amount is 1/2 or more of the laminating height. As described above, by cutting the upper surface by 1/2 or more of the laminating height, it is possible to cut a curve portion 261 of the ellipse, and leave a portion 262 approximate to a straight line of the ellipse. The bead 260 with the thus cut upper surface has an almost vertical side surface.

The three-dimensional laminating and shaping apparatus 200 shapes a new bead 260 of one layer on the bead 260 which has been cut and has the almost vertical side surface (403 in Fig. 4), and then cuts the upper surface of the newly formed bead 260 by the cutter 203 (404 in Fig. 4). The three-dimensional laminating and shaping apparatus 200 shapes a next bead 260 (405 in Fig. 4). By repeating these steps, the three-dimensional laminating and shaping apparatus 200 can laminate the plurality of beads 260 each having an almost vertical side surface, and shape the three-dimensional laminated and shaped object 250 having high side surface accuracy. The surface roughness of the side surface of the three-dimensional laminated and shaped object 250 obtained by performing cutting by the three-dimensional laminating and shaping apparatus 200 is about 1/10 of that of a three-dimensional laminated and shaped object obtained without performing cutting.

Note that an example in which cutting is performed for every layer has been explained as a cutting timing. The cutting timing is not limited to this. For example, cutting may be performed for every predetermined number of layers (n layers).

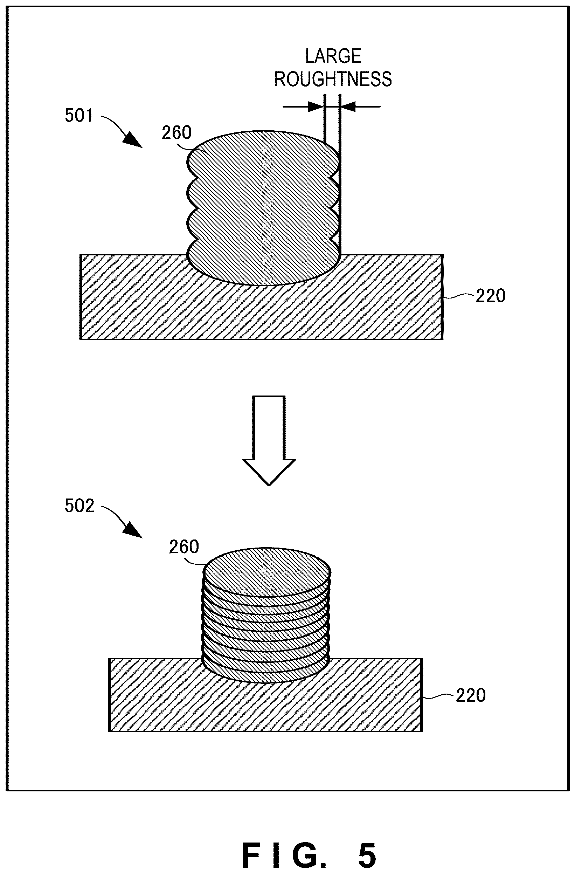

Fig. 5 is a view showing the three-dimensional laminated and shaped object shaped without performing cutting by the three-dimensional laminating and shaping apparatus 200 and the three-dimensional laminated and shaped object shaped by performing cutting by the three-dimensional laminating and shaping apparatus 200 according to this embodiment. The three-dimensional laminated and shaped object shaped without performing cutting by the three-dimensional laminating and shaping apparatus 200 is shaped by laminating the beads 260 each having the elliptic sectional shape, and thus the shaping roughness of the side surface is large (501 in Fig. 5).

To the contrary, since the three-dimensional laminated and shaped object shaped by performing cutting by the three-dimensional laminating and shaping apparatus 200 is shaped by laminating the beads 260 each having the almost vertical side surface, the roughness of the side surface of the shaped object is small (502 in Fig. 5).

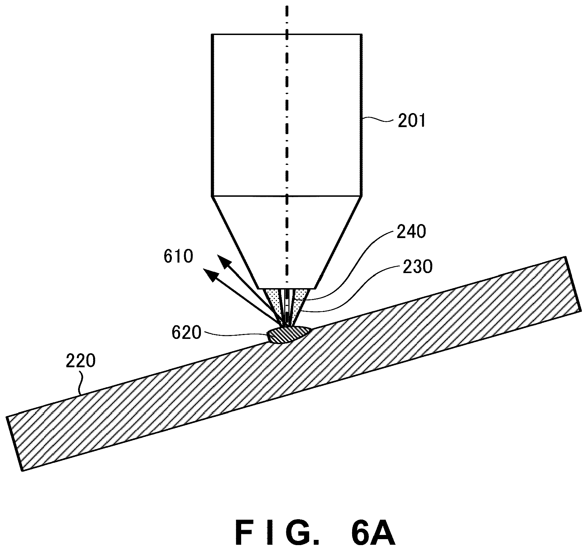

Figs. 6A to 6C are views for explaining a problem in another example of shaping of the three-dimensional laminated and shaped object 250 by the three-dimensional laminating and shaping apparatus 200 according to this embodiment. If the material 230 of the three-dimensional laminated and shaped object 250 is the material 230 having a high reflectance for the light beam 240, such as copper (Cu), aluminium (Al), or iron (Fe), it is necessary to perform laminating and shaping by inclining the shaping table 220, as shown in Fig. 6A.

This is because if the material 230 having a high reflectance for the light beam 240 is used, light 610 reflected from a molten pool 620 formed when the material 230 is melted by heat of the light beam 240 enters the material ejector 201, and damages the light beam oscillator for the light beam 240, the condenser lens for the light beam 240, or the like.

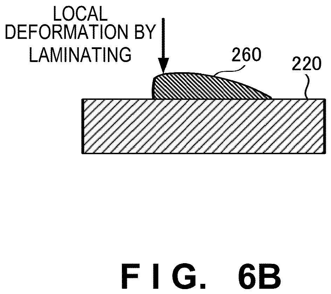

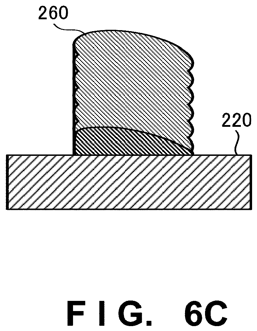

However, if, as shown in Fig. 6A, the shaping table 220 is inclined, a locally deformed bead 260 is formed, as shown in Fig. 6B. Then, if, as shown in Fig. 6C, shaping is continued while the bead 260 is locally deformed, the local deformation is accumulated, thereby forming the three-dimensional laminated and shaped object 250 having a large shaping error.

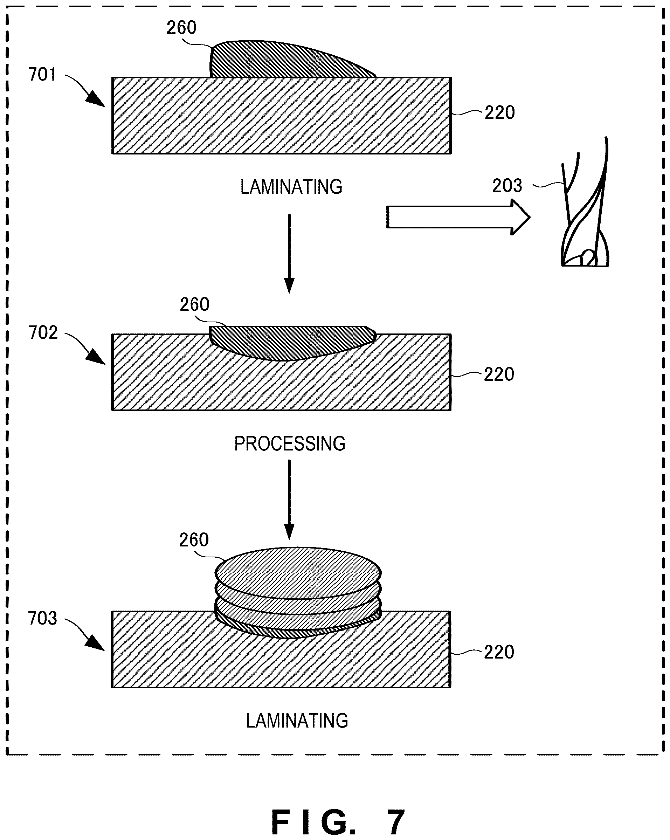

Fig. 7 is a view for explaining the other example of shaping of the three-dimensional laminated and shaped object 250 by the three-dimensional laminating and shaping apparatus 200 according to this embodiment. Referring to Fig. 7, the shaping table 220 is horizontally drawn on a sheet but is actually inclined.

As shown in 701 of Fig. 7, if shaping is executed by inclining the shaping table 220 and irradiating the material 230 with the light beam 240, the formed bead 260 is locally deformed. As shown in 702 of Fig. 7, for example, after completion of laminating of the material 230 of one layer, the formed bead 260 is cut using the cutter 203. As shown in 703 of Fig. 7, the next material 230 is laminated on the cut bead 260. By repeating the above procedure, it is possible to shape the three-dimensional laminated and shaped object 250 with high precision and high efficiency even if the shaping table 220 is inclined. Note that an example in which the shaping table 220 is inclined has been explained. However, the material ejector 201 and the cutter 203 may be inclined while maintaining the shaping table 220 in a horizontal position. After shaping, the inclination of the shaping table 220 may be adjusted to position the cutter 203 and the shaping table to be almost perpendicular to each other, thereby cutting the formed bead 260.

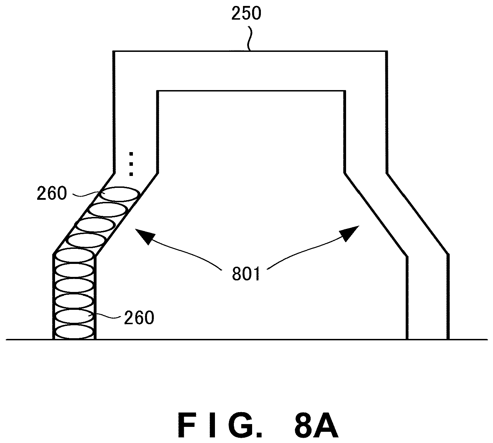

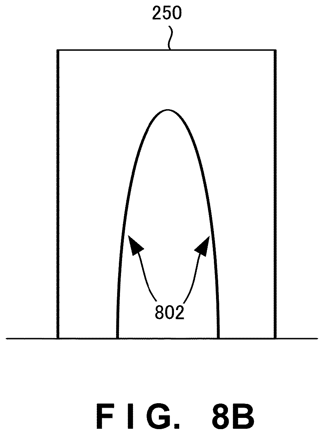

Fig. 8A is a view showing an example of the three-dimensional laminated and shaped object 250 having a structure advantageous in shaping by the three-dimensional laminating and shaping apparatus 200 according to this embodiment. Fig. 8B is a view showing another example of the three-dimensional laminated and shaped object 250 having a structure advantageous in shaping by the three-dimensional laminating and shaping apparatus 200 according to this embodiment. As shown in Fig. 8A or 8B, if the three-dimensional laminated and shaped object 250 has a closed structure (hollow structure) including a space, even if an attempt is made to cut portions indicated by arrows 801 or 802 after completion of cutting, the cutting tool cannot reach them and it is thus difficult to cut them. To cope with this, if the three-dimensional laminating and shaping apparatus 200 according to this embodiment shapes such the three-dimensional laminated and shaped object 250, the high-precision three-dimensional laminated and shaped object 250 can be obtained within a short time upon completion of shaping. All the beads 260 formed by the material ejector 201 can be processed by the cutter 203. Therefore, the three-dimensional laminated and shaped object 250 having the structure advantageous in shaping by the three-dimensional laminating and shaping apparatus 200 according to this embodiment is not limited to those shown in Figs. 8A and 8B. For example, the three-dimensional laminated and shaped object 250 having a more complicated structure or a simple structure may be used.

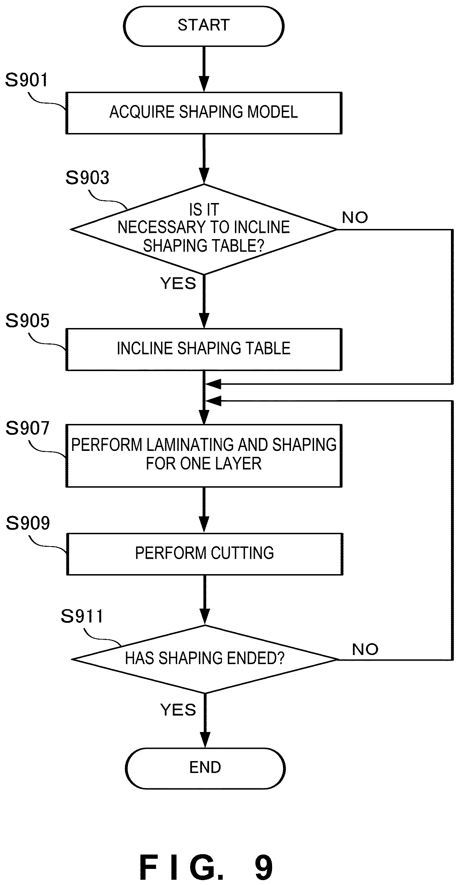

Fig. 9 is a flowchart for explaining the processing procedure of the three-dimensional laminating and shaping apparatus 200 according to this embodiment. In step S901, the three-dimensional laminating and shaping apparatus 200 acquires the shaping model of the three-dimensional laminated and shaped object 250, and acquires, based on the acquired shaping model, shaping data such as the kind of material 230 and the intensity of the light beam 240 with which irradiation is performed.

In step S903, the three-dimensional laminating and shaping apparatus 200 determines based on the acquired shaping data whether it is necessary to incline the shaping table 220. The three-dimensional laminating and shaping apparatus 200 determines, from the acquired shaping data, the necessity to incline the shaping table 220 based on, for example, whether the material 230 has a high reflectance. If it is necessary to incline the shaping table 220, the three-dimensional laminating and shaping apparatus 200 advances to step S905. In step S905, the three-dimensional laminating and shaping apparatus 200 inclines the shaping table 220 by a predetermined angle. If it is not necessary to incline the shaping table 220, the three-dimensional laminating and shaping apparatus 200 advances to step S907.

In step S907, the three-dimensional laminating and shaping apparatus 200 performs laminating and shaping for one layer. In step S909, the three-dimensional laminating and shaping apparatus 200 cuts the surface, for example, the upper surface of the formed bead 260 by a predetermined amount.

In step S911, the three-dimensional laminating and shaping apparatus 200 determines whether laminating and shaping of the three-dimensional laminated and shaped object 250 have ended. If laminating and shaping have ended, the three-dimensional laminating and shaping apparatus 200 terminates the processing; otherwise, the three-dimensional laminating and shaping apparatus 200 repeats step S907 and the subsequent steps.

According to this embodiment, it is possible to shorten the shaping time while shaping a high-precision three-dimensional laminated and shaped object. If a three-dimensional laminated and shaped object obtained by joining a plurality of materials having a weak joining strength is laminated and shaped by providing an intermediate layer, it is possible to obtain a dissimilar material-joined three-dimensional laminated and shaped object while decreasing the thickness of the intermediate layer. Furthermore, if a three-dimensional laminated and shaped object is shaped using a material having a high light beam reflectance, even if the shaping table is inclined, a bead having small local deformation can be formed, thereby obtaining a three-dimensional laminated and shaped object with high shaping precision.

### [Other Embodiments]

While the present invention has been described with reference to exemplary embodiments, it is to be understood that the invention is not limited to the disclosed exemplary embodiments.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program comprising instructions to cause the three-dimensional laminating and shaping apparatus to execute processing steps included in the above-described embodiments.

## Claims

1. A three-dimensional laminating and shaping apparatus (100; 200) comprising:
a material ejector (101; 201) that is configured to eject a material (130; 230) of a three-dimensional laminated and shaped object (150; 250) onto a shaping table (120; 220) on which the three-dimensional laminated and shaped object (150; 250) is shaped;
a light beam irradiator (102; 202) that is configured to irradiate the ejected material (130; 230) with a light beam (140; 240);
a cutter (103; 203) that is configured to cut a bead (160; 260) formed when the material (130; 230) irradiated with the light beam (140; 240) is melted and solidified; and
a controller (104) that is configured to control ejection of the material (130; 230) by the material ejector (101; 201), irradiation with the light beam (140) by the light beam irradiator (102; 202), and cutting of the bead (160; 260) by the cutter (103; 203),
**characterized in that**
said controller (104) is configured to cause the cutter (103; 203) to cut an upper surface of the bead (160; 260) by not less than 1/2 a laminating height of the bead (160; 260) to be parallel to the shaping table (120; 220) at least once during a plurality of shaping steps by said material ejector (101; 201) and said light beam irradiator (102; 202), and thereby reduces a roughness of a side surface of the bead (160; 260).

2. The three-dimensional laminating and shaping apparatus (200) according to claim 1, further comprising:
an inclination unit (205) that is configured to incline the shaping table (220).

3. A control method of a three-dimensional laminating and shaping apparatus (100; 200), comprising:
ejecting a material (130; 230) of a three-dimensional laminated and shaped object (150; 250) onto a shaping table (120; 220) on which the three-dimensional laminated and shaped object (150; 250) is shaped;
irradiating the ejected material (130; 230) with a light beam (140; 240); and
cutting a bead (160; 260) formed when the material (130; 230) irradiated with the light beam (140; 240) is melted and solidified,
**characterized in that**
in the cutting, an upper surface of the bead (160; 260) is cut by not less than 1/2 a laminating height of the bead (160; 260) to be parallel to the shaping table (120; 220) at least once during a plurality of shaping steps in the ejecting and the irradiating, and thereby a roughness of a side surface of the bead (160; 260) is reduced.

4. A control program of a three-dimensional laminating and shaping apparatus (100; 200), comprising instructions to cause the three-dimensional laminating and shaping apparatus (100; 200) to execute a method, comprising:
ejecting a material (130; 230) of a three-dimensional laminated and shaped object (150; 250) onto a shaping table (120; 220) on which the three-dimensional laminated and shaped object (150; 250) is shaped;
irradiating the ejected material (130; 230) with a light beam (140; 240); and
cutting a bead (160; 260) formed when the material irradiated with the light beam (140; 240) is melted and solidified,
**characterized in that**
wherein in the cutting, an upper surface of the bead (160; 260) is cut by not less than 1/2 a laminating height of the bead (160; 260) to be parallel to the shaping table (120; 220) at least once during a plurality of shaping steps in the ejecting and the irradiating, and thereby a roughness of a side surface of the bead (160; 260) is reduced.

## Patentansprüche

1. Vorrichtung zum dreidimensionalen Schichten und Formen (100; 200), die Folgendes umfasst:
eine Materialausstoßeinrichtung (101; 201), die so konfiguriert ist, dass sie ein Material (130; 230) eines dreidimensionalen geschichteten und geformten Objekts (150; 250) auf einen Formtisch (120; 220) ausstößt, auf dem das dreidimensionale geschichtete und geformte Objekt (150; 250) geformt wird;
eine Lichtstrahlbestrahlungseinrichtung (102; 202) die so konfiguriert ist, dass die das ausgestoßene Material (130; 230) mit einem Lichtstrahl (140; 240) bestrahlt;
eine Schneideeinrichtung (103; 203), die so konfiguriert ist, dass sie eine Raupe (160; 260) schneidet, die ausgebildet wird, wenn das mit dem Lichtstrahl (140; 240) bestrahlte Material (130; 230) geschmolzen und erstarren gelassen wird; und
eine Steuerung (104), die so konfiguriert ist, dass sie den Ausstoß des Materials (130; 230) durch die Materialausstoßeinrichtung (101; 201), die Bestrahlung mit dem Lichtstrahl (140) durch die Lichtstrahlbestrahlungseinrichtung (102; 202) und das Schneiden der Raupe (160; 260) durch die Schneideeinrichtung (103; 203) steuert,
**dadurch gekennzeichnet, dass**
die Steuerung (104) so konfiguriert ist, dass sie die Schneideeinrichtung (103; 203) dazu bringt, eine Oberseite der Raupe (160; 260) mindestens einmal während einer Vielzahl von Formschritten durch die Materialausstoßeinrichtung (101; 201) und die Lichtstrahlbestrahlungseinrichtung (102; 202) um nicht weniger als eine halbe Aufschichtungshöhe der Raupe (160; 260) zu schneiden, damit sie parallel zum Formtisch (120; 220) ist, und dadurch eine Rauheit einer Seitenfläche der Raupe (160; 260) verringert.

2. Vorrichtung zum dreidimensionalen Schichten und Formen (200) nach Anspruch 1, die außerdem Folgendes umfasst:
eine Neigungseinheit (205), die so konfiguriert ist, dass sie den Formtisch (220) neigt.

3. Steuerverfahren einer Vorrichtung zum dreidimensionalen Schichten und Formen (100; 200), das Folgendes umfasst:
Ausstoßen eines Materials (130; 230) eines dreidimensionalen geschichteten und geformten Objekts (150; 250) auf einen Formtisch (120; 220), auf dem das dreidimensionale geschichtete und geformte Objekt (150; 250) geformt wird;
Bestrahlen des ausgestoßenen Materials (130; 230) mit einem Lichtstrahl (140; 240); und
Schneiden einer Raupe (160; 260), die ausgebildet wird, wenn das mit dem Lichtstrahl (140; 240) bestrahlte Material (130; 230) geschmolzen und erstarren gelassen wird,
**dadurch gekennzeichnet, dass**
beim Schneiden eine Oberseite der Raupe (160; 260) mindestens einmal während einer Vielzahl von Formschritten beim Ausstoßen und Bestrahlen um nicht weniger als eine halbe Aufschichtungshöhe der Raupe (160; 260) geschnitten wird, damit sie parallel zum Formtisch (120; 220) ist, und dadurch eine Rauheit einer Seitenfläche der Raupe (160; 260) verringert wird.

4. Steuerungsprogramm einer Vorrichtung zum dreidimensionalen Schichten und Formen (100; 200), das Anweisungen umfasst, um die Vorrichtung zum dreidimensionalen Schichten und Formen (100; 200) dazu zu bringen, ein Verfahren auszuführen, das Folgendes umfasst:
Ausstoßen eines Materials (130; 230) eines dreidimensionalen geschichteten und geformten Objekts (150; 250) auf einen Formtisch (120; 220), auf dem das dreidimensionale geschichtete und geformte Objekt (150; 250) geformt wird;
Bestrahlen des ausgestoßenen Materials (130; 230) mit einem Lichtstrahl (140; 240); und
Schneiden einer Raupe (160; 260), die ausgebildet wird, wenn das mit dem Lichtstrahl (140; 240) bestrahlte Material (130; 230) geschmolzen und erstarren gelassen wird,
**dadurch gekennzeichnet, dass**
beim Schneiden eine Oberseite der Raupe (160; 260) mindestens einmal während einer Vielzahl von Formschritten beim Ausstoßen und Bestrahlen um nicht weniger als eine halbe Aufschichtungshöhe der Raupe (160; 260) geschnitten wird, damit sie parallel zum Formtisch (120; 220) ist, und dadurch eine Rauheit einer Seitenfläche der Raupe (160; 260) verringert wird.

## Revendications

1. Appareil de stratification et de formage en trois dimensions (100 ; 200) comprenant :
un éjecteur de matériau (101 ; 201) qui est configuré pour éjecter un matériau (130 ; 230) d'un objet stratifié et formé en trois dimensions (150 ; 250) sur une table de formage (120 ; 220) sur laquelle l'objet stratifié et formé en trois dimensions (150 ; 250) est formé ;
un dispositif de rayonnement de faisceau lumineux (102 ; 202) qui est configuré pour rayonner le matériau éjecté (130 ; 230) avec un faisceau lumineux (140 ; 240) ;
un dispositif de coupe (103 ; 203) qui est configuré pour couper un bourrelet (160 ; 260) formé lorsque le matériau (130 ; 230) rayonné avec le faisceau lumineux (140 ; 240) est fondu et solidifié ; et
un organe de commande (104) qui est configuré pour commander l'éjection du matériau (130 ; 230) par l'éjecteur de matériau (101 ; 201), le rayonnement avec le faisceau lumineux (140) par le dispositif de rayonnement de faisceau lumineux (102 ; 202) et la découpe du bourrelet (160 ; 260) par le dispositif de coupe (103 ; 203),
**caractérisé en ce que** :
ledit organe de commande (104) est configuré pour amener le dispositif de coupe (103 ; 203) à couper une surface supérieure du bourrelet (160 ; 260) selon une valeur non inférieure à ½ d'une hauteur de stratification du bourrelet (160 ; 260) pour être parallèle à la table de formage (120 ; 220) au moins une fois pendant une pluralité d'étapes de formage par ledit éjecteur de matériau (101 ; 201) et ledit dispositif de rayonnement de faisceau lumineux (102 ; 202) et ainsi réduit une rugosité d'une surface latérale du bourrelet (160 ; 260).

2. Appareil de stratification et de formage en trois dimensions (200) selon la revendication 1, comprenant en outre :
une unité d'inclinaison (205) qui est configurée pour incliner la table de formage (220).

3. Procédé de commande d'un appareil de stratification et de formage en trois dimensions (100 ; 200) comprenant les étapes suivantes :
éjecter un matériau (130 ; 230) d'un objet stratifié et formé en trois dimensions (150 ; 250) sur une table de formage (120 ; 220) sur laquelle l'objet stratifié et formé en trois dimensions (150 ; 250) est formé ;
rayonner le matériau éjecté (130 ; 230) avec un faisceau lumineux (140 ; 240) ; et
couper un bourrelet (160 ; 260) formé lorsque le matériau (130 ; 230) rayonné par le faisceau lumineux (140 ; 240) est fondu et solidifié,
**caractérisé en ce que** :
lors de la coupe, une surface supérieure du bourrelet (160 ; 260) est coupée selon une valeur non inférieure à ½ d'une hauteur de stratification du bourrelet (160 ; 260) pour être parallèle à la table de formage (120 ; 220) au moins une fois pendant une pluralité d'étapes de formage lors de l'éjection et du rayonnement, et ainsi une rugosité d'une surface latérale du bourrelet (160 ; 260) est réduite.

4. Programme de commande d'un appareil de stratification et de formage en trois dimensions (100 ; 200) comprenant des instructions pour amener l'appareil de stratification et de formage en trois dimensions (100 ; 200) à exécuter un procédé, comprenant les étapes suivantes :
éjecter un matériau (130 ; 230) d'un objet stratifié et formé en trois dimensions (150 ; 250) sur une table de formage (120 ; 220) sur laquelle l'objet stratifié et formé en trois dimensions (150 ; 250) est formé ;
rayonner le matériau éjecté (130 ; 230) avec un faisceau lumineux (140 ; 240) ; et
couper un bourrelet (160 ; 260) formé lorsque le matériau rayonné par le faisceau lumineux (140 ; 240) est fondu et solidifié,
**caractérisé en ce que** :
lors de la coupe, une surface supérieure du bourrelet (160 ; 260) est coupée selon une valeur non inférieure à ½ d'une hauteur de stratification du bourrelet (160 ; 260) pour être parallèle à la table de formage (120 ; 220) au moins une fois pendant une pluralité d'étapes de formage lors de l'éjection et du rayonnement, et ainsi une rugosité d'une surface latérale du bourrelet (160 ; 260) est réduite.
